# DEMANDE DE BREVET EUROPEEN

(11) **EP 2 269 957 A1**
(43) Date de publication de la demande: **05.01.2011**
(21) Numéro de dépôt: 10006337.9
(22) Date de dépôt: 18.06.2010
(51) Int. Cl.: C02F 1/66, C02F 1/68

(54) **Composition solide pour la neutralisation du pH d'un fluide acide**

(30) Priorité: 18.06.2009 FR 0902963
(71) Demandeur: Journel, Catherine, 22210 La Cheze (FR)
(72) Inventeur: Journel, Catherine, 22210 La Cheze (FR)
(74) Mandataire: Maillet, Alain

(57) **Abrégé**

La présente invention concerne le domaine de la correction et de la neutralisation du pH d'un fluide acide, tel qu'une eau acide, à l'aide d'une composition à base d'un mélange de substances alcalinisantes présentant une propriété dissolution progressive et pH-dépendante, ladite dissolution cessant lorsque le pH est neutralisé.

Le dispositif de neutralisation du pH selon l'invention se **caractérise en ce qu**'il est composé d'un mélange comprenant au moins deux substances alcalinisantes dont la dissolution dans ledit fluide est progressive et proportionnelle au pH et au volume du fluide et s'interrompt lorsque le pH dudit fluide est égal ou proche de 7.

Avantageusement, le dispositif se présente sous une forme solide qui s'utilise placé en immersion dans le fluide à traiter. La forme solide se dissout progressivement jusqu'à obtention d'un pH neutre, ou proche de la neutralité.

## Description

La présente invention concerne une composition pour la correction et la neutralisation du pH d'un fluide acide, tel qu'une eau acide. Plus particulièrement, l'invention concerne une composition à base d'un mélange de substances alcalinisantes à dissolution progressive et pH-dépendante.

La qualité d'une eau peut être caractérisée par plusieurs paramètres physico-chimiques. Ces paramètres sont généralement le reflet de la nature géologique des terrains traversés. Parmi ces paramètres, le potentiel hydrogène (ou pH) mesure l'acidité ou l'alcalinité d'une solution et l'exprime selon une échelle variant de 1 (acide) à 14 (basique). La neutralité est obtenue pour un pH égal à 7 ou proche de 7, c'est-à-dire situé entre 6,5 et 8. La neutralisation consiste en l'action de modifier le pH d'un fluide pour le stabiliser à un pH proche de la neutralité (pH = 7).

Selon les différents usages de l'eau, le niveau de pH souhaité peut varier. Il est alors nécessaire de corriger plus ou moins intensément le pH initial de l'eau utilisée pour aboutir au niveau de pH souhaité. Il existe différentes solutions techniques connues pour faire varier le pH de l'eau par utilisation de substances acidifiantes (diminution du pH) ou alcalinisantes (augmentation du pH). Ces substances se présentent sous forme solide, liquide ou gazeuse.

On décrira ci-après, à titre d'exemples non limitatifs, trois modalités d'utilisation de substances neutralisantes connues, en référence aux dessins annexés sur lesquels :
La Fig. 1 représente un exemple d'utilisation de substances neutralisantes en présentation solide.
La Fig. 2 représente un exemple d'utilisation de substances neutralisantes en présentation liquide.
La Fig. 3 représente un exemple d'utilisation de substances neutralisantes en présentation gazeuse.

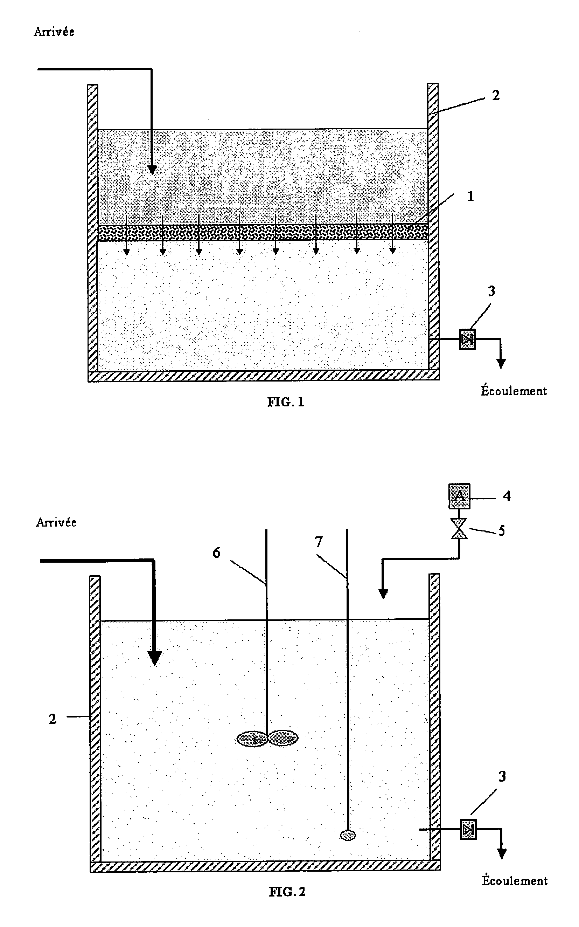

Sur la Fig. 1 est représenté un exemple d'utilisation de substances neutralisantes en présentation solide. La présentation solide (poudre, granulé ou résine) est utilisée comme média de neutralisation pour constituer un filtre (1) où se produisent les échanges de sels minéraux responsables de la variation de pH. Ce filtre est nécessairement placé dans une cuve de neutralisation (2) pour être traversé par le flux d'eau à traiter. La vitesse d'écoulement de l'eau à traiter doit être calculée et régulée de telle façon que l'eau résiduaire reste en contact avec le matériau filtrant jusqu'à ce que le degré de neutralisation souhaité soit obtenu. L'eau traitée est ensuite évacuée par une pompe de soutirage (3).

Sur la Fig. 2 est représenté un exemple d'utilisation de substances neutralisantes en présentation liquide. La présentation liquide (4) est incorporée par une pompe doseuse (5) dans une cuve de neutralisation (2) avec l'eau à traiter. Selon le volume à traiter, un dispositif d'agitation (6) est nécessaire. Le débit du réactif liquide de neutralisation est régulé par contrôle du pH final à l'aide d'électrode (7) de mesure du pH. L'eau traitée sort du mélangeur par une pompe de soutirage (3).

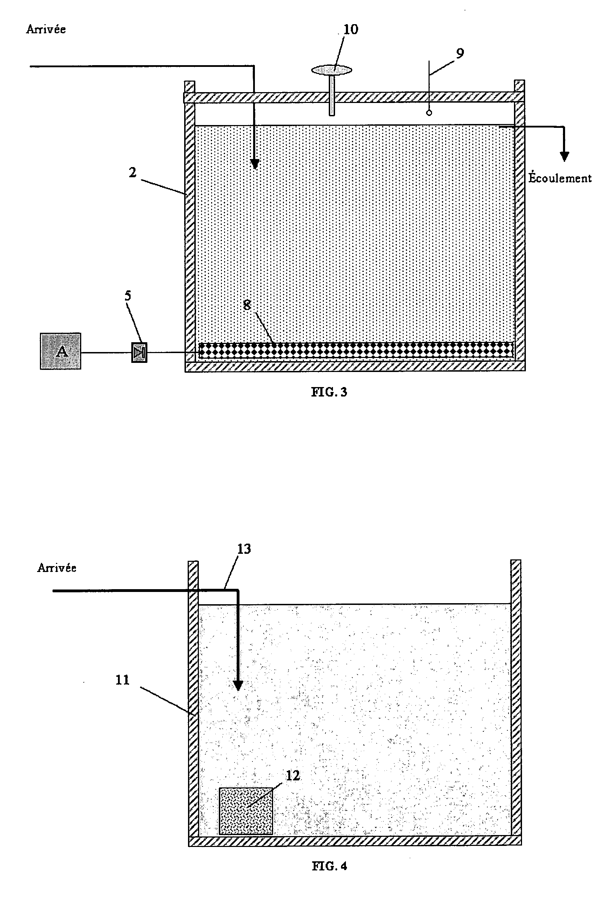

Sur la Fig. 3 est représenté un exemple d'utilisation de substances neutralisantes en présentation gazeuse. La présentation gazeuse s'utilise par diffusion du gaz dans l'eau à traiter, placée dans une cuve de neutralisation (2). Lors de la remontée du gaz vers la surface, des échanges moléculaires se produisent et font varier le pH. Cette méthode nécessite l'utilisation d'un matériel de diffusion (8) associé à des contrôleurs de pression (9) et de dosage (5), et un évaporateur (10).

Il n'existe donc pas de moyen fonctionnant de manière autonome et permettant de neutraliser le pH de l'eau à traiter sans avoir besoin de matériel complémentaire d'administration des substances réactives et/ou de mesure du pH (avant et/ou après l'étape de correction), tout en garantissant un niveau de pH après correction proche de 7.

La présente invention a pour but de remédier à ce problème en proposant un moyen de correction et de neutralisation du pH d'un fluide initialement acide, notamment de l'eau, fonctionnant de manière autonome, c'est-à-dire, sans nécessiter le recours à du matériel complémentaire, ledit moyen étant économique, simple de conception et d'utilisation.

A cet effet, l'invention concerne une composition sous forme solide destinée à corriger et à neutraliser le pH d'un fluide acide jusqu'à une valeur de pH égale ou proche de 7, qui se caractérise en ce qu'elle est composée d'un mélange comprenant au moins deux substances alcalinisantes et présentant la propriété de se dissoudre dans ledit fluide uniquement jusqu'à ce que le pH dudit fluide soit égal ou proche de 7.

La composition selon l'invention est ainsi composée d'un mélange à base de substances alcalinisantes, le mélange étant tel qu'il présente la caractéristique de se dissoudre progressivement dans un fluide acide tant que le pH demeure acide et uniquement jusqu'à ce que celui-ci atteigne le point de neutralité (pH final proche de 7).

L'intérêt principal de l'invention réside, d'une part, dans son autonomie ne nécessitant pas d'utilisation d'autres matériels (pompes doseuses électriques, électrodes, ...) et, d'autre part, dans cette propriété que présente le mélange de se dissoudre uniquement jusqu'à ce que le pH atteigne une valeur de neutralité. Une fois la neutralité atteinte, la dissolution s'interrompt. Cette caractéristique permet de garantir le maintien d'un pH neutre, ou proche de la neutralité, après correction, sans que le pH ne prenne des valeurs supérieures à la neutralité.

La dissolution du mélange de substances alcalinisantes est progressive et proportionnelle au pH initial et au volume de fluide à traiter, y compris lorsque ce volume est en renouvellement constant (fontaine, abreuvoir, ...).

De plus, l'utilisation de la composition selon l'invention est simple puisqu'il suffit de la placer en immersion dans le fluide à traiter.

La quantité de substances alcalinisantes qui se dissout dans l'eau est proportionnelle à l'acidité initiale du fluide et au volume de fluide à traiter : plus le fluide est initialement acide et/ou plus le volume à traiter est important, plus la quantité de substances alcalinisantes qui se retrouve dissoute est importante. La dissolution s'arrête lorsque la neutralité du pH est atteinte ou en est proche. Cette caractéristique selon laquelle la dissolution est pH-dépendante et cesse lorsque la neutralité est atteinte est due au mélange de substances alcalinisantes, ces substances ne présentant pas de telles propriétés prises individuellement.

Selon un mode de réalisation de l'invention, les substances alcalinisantes sont choisies parmi les carbonates, les phosphates ou les oxydes de métaux alcalins ou alcalino-terreux ou un de leurs mélanges.

Avantageusement, les substances alcalinisantes sont choisies parmi le carbonate de sodium, le carbonate de calcium, le phosphate de magnésium, l'oxyde de magnésium, le phosphate monobicalcique ou un de leur mélanges.

Avantageusement encore, les substances alcalinisantes sont présentes à une concentration comprise entre 10 et 80 %, en pourcentage de la composition totale du mélange.

Selon un premier mode de réalisation de l'invention, le mélange est composé de (a) 10 à 80 %, préférentiellement 35 à 50 %, de carbonate de sodium ou de carbonate de calcium et (b) de 10 à 80 %, préférentiellement 35 à 50 %, de phosphate de magnésium, d'oxyde de magnésium ou de phosphate monobicalcique, en pourcentage de la formule.

Selon un autre mode de réalisation de l'invention, le mélange est composé de (a) 10 à 80 %, préférentiellement 35 à 50 %, de carbonate de sodium, de (b) de 10 à 80 %, préférentiellement 35 à 50 %, de carbonate de calcium et de (c) 10 à 80 %, préférentiellement 35 à 50 %, plus préférentiellement 10 à 30 %, de phosphate de magnésium, d'oxyde de magnésium ou de phosphate monobicalcique, en pourcentage de la formule.

Selon un mode de réalisation particulièrement intéressant de l'invention, le mélange est composé de 10 à 80 %, préférentiellement 35 à 50 %, de carbonate de sodium, 10 à 80 %, préférentiellement 35 à 50 %, de carbonate de calcium et 10 à 80 %, préférentiellement 35 à 50 %, plus préférentiellement 10 à 30%, de phosphate de magnésium, en pourcentage de la formule.

Selon un autre mode de réalisation de l'invention, le mélange comprend, de plus, au moins une autre substance chimique, organique ou minérale connue pour présenter un intérêt technique pour le traitement de l'eau ou pour l'usage de l'eau traitée. Cette autre substance peut être ajoutée en proportion minoritaire.

Par exemple, dans le cas d'un traitement d'eau de piscine, des substances algicides ou désinfectantes peuvent être ajoutées, ou dans le cas de traitement d'eau potable, l'apport de d'oligo-éléments et/ou de vitaminiques peut être intéressant en tant que complément nutritionnel.

Préférentiellement, la composition selon l'invention se présente sous forme cubique, cylindrique, sphérique, annulaire, rectangulaire, tel que des galets circulaires ou des cubes.

La forme solide de la composition est obtenue après les étapes successives d'homogénéisation, moulage, prise en masse et séchage d'un mélange comprenant 70% des matières premières en poudre et 30% d'eau acide (pH 4 à 5 ; température 10 - 15 °C). La réaction de mélange est exothermique. La prise en masse est quasi instantanée. Il n'y a pas d'étape de chauffage, ni de cuisson. Le temps de séchage est de 2 à 3 jours à température et hygrométrie ambiantes (18°C ; 50%). Pour des applications industrielles, ce temps de séchage peut être réduit par l'utilisation d'une étuve.

La présente invention concerne donc encore un tel procédé d'obtention d'une composition solide de neutralisation du pH.

Après séchage, la composition s'utilise en la plaçant en immersion dans le fluide à traiter. Elle se dissout progressivement jusqu'à obtention d'un pH neutre. Après dissolution complète, une nouvelle composition solide peut être placée dans l'eau à traiter si besoin est.

La quantité de substances alcalinisantes qui se dissout est proportionnelle au pH initial de l'eau et au volume d'eau à traiter. Par exemple, dans le cas de la neutralisation d'un volume de 1 m3 d'une eau à pH = 5, une dose solide de 125 g de mélange (produit à 25% d'humidité avant immersion) sera dissoute pour atteindre la neutralité du pH. Le volume de la forme solide peut varier selon l'utilisation et doit être adapté au volume d'eau à traiter. La densité du produit est variable selon l'humidité. Par exemple, la densité est comprise entre 1000 et 1500 kg par m3 pour une humidité d'environ 25% avant immersion.

La dissolution de la forme solide est quasi-complète. De faibles traces de résidus non dissous peuvent être observées. La dissolution du mélange influence peu la concentration en éléments minéraux de l'eau après neutralisation.

L'invention est destinée au traitement de tous types d'eau et fluides acides. Lorsque la composition est à base de matières premières exclusivement alimentaires, elle permet de traiter l'eau d'abreuvement pour humains et animaux.

L'invention concerne encore l'utilisation d'une composition solide telle que décrite précédemment pour le traitement de tous les types d'eau acide et de fluides acides.

Selon un mode de réalisation de l'invention, la composition est utilisée pour traiter les eaux d'abreuvement en alimentation humaine et animale.

Selon un autre mode de réalisation de l'invention, la composition est utilisée pour traiter les eaux ou tous fluides issus d'une activité industrielle.

Selon un autre mode de réalisation de l'invention, la composition est utilisée pour traiter les eaux de pluies.

A titre d'exemples, les domaines d'activité concernés par l'invention sont l'entretien des piscines et des bassins d'ornement, l'agriculture dont l'élevage et la pisciculture, l'aquariophilie, le traitement de l'eau avant utilisation industrielle et le traitement des effluents industriels.

On présentera ci-après, à titre d'exemples non limitatifs, des exemples d'applications de la composition selon l'invention, lesdits exemples étant décrits en lien avec les dessins joints, parmi lesquels :

La Fig. 4 représente l'utilisation d'une composition selon l'invention dans le traitement de l'eau d'un abreuvoir,

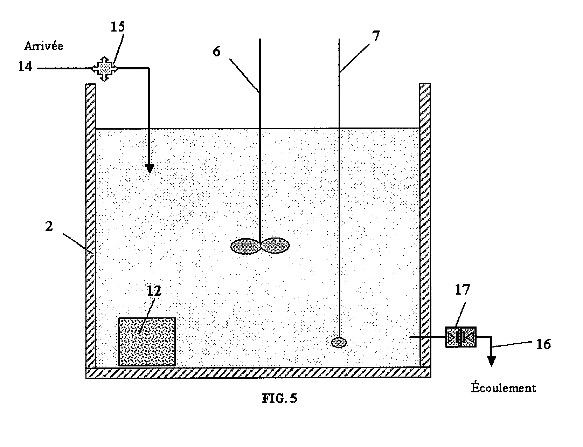

La Fig. 5 représente l'utilisation d'une composition selon l'invention dans la neutralisation des effluents industriels.

Le premier exemple présente une application pour le secteur agricole (élevage) avec le traitement de l'eau d'abreuvement des ruminants.

La législation oblige à ce que l'eau utilisée pour l'abreuvement des animaux soit potable. Le pH de l'eau d'abreuvement des animaux influe sur la santé de l'animal selon son système digestif. Pour les espèces monogastriques (porc, volaille, chien, chat, ...), la consommation d'une eau légèrement acide intervient comme facteur bénéfique de prévention des pathologies digestives (diarrhées, entérotoxémies, ...). En revanche, pour les espèces de ruminants (bovins, ovins, caprins, camélidés, ...), la consommation d'une eau acide accentue la gravité d'une pathologie bien décrite, l'acidose ruminale, et pénalise la santé de l'animal. Dans le cas des animaux de rente (bovins, ovins, caprins), l'impact négatif de l'abreuvement avec une eau acide sur la santé de l'animal dégrade ses performances zootechniques et donc la rentabilité de l'élevage.

Le rumen des ruminants peut être assimilé à une cuve de fermentation où travaille une microflore bactérienne composée de bactéries cellulolytiques (qui digèrent la cellulose) et amylolytiques (qui digèrent l'amidon) et de protozoaires. Ces bactéries sont très sensibles aux variations de pH et leur activité métabolique est maximale lorsque le pH du rumen est supérieur à 6.

L'acidification du rumen est naturelle suite à la dégradation des composés alimentaires en acides gras volatils (AGV) par la microflore du rumen. Le ruminant est équipé de systèmes de régulation (recyclage salivaire de facteurs tampon) qui limitent la baisse de pH du rumen au cours de la journée.

Lorsque les systèmes de régulation du pH ruminal du ruminant ne compensent plus l'acidification naturelle du rumen, le pH reste régulièrement en dessous de 5,5 au cours de la journée. Le ruminant est alors médicalement décrit en état de sub-acidose. Ce phénomène se produit lorsque le ruminant consomme des fourrages conservés acides (ensilages de maïs ou herbe) associés à des aliments énergétiques rapidement fermentescibles (riches en céréales notamment). La consommation d'une eau acide amplifie alors le phénomène car l'eau est sur le plan quantitatif le premier ingrédient de la ration. Elle influence donc significativement le pH final du mélange alimentaire.

La Fig. 4 illustre l'utilisation de la composition selon l'invention dans un abreuvoir (11). Les systèmes d'abreuvement des ruminants sont généralement constitués de bacs de 20 à 1000 litres à renouvellement d'eau proportionnel à la consommation (bac à niveau constant). La composition selon l'invention sous une forme solide (12), est placée à proximité du point d'arrivée d'eau (13). Ceci permet de corriger en continu le pH de l'eau bue par les animaux au cours de son renouvellement. Les animaux consomment ainsi une eau à pH neutre.

Lorsque la forme solide est totalement dissoute, une nouvelle forme solide doit la remplacer dans l'abreuvoir. Etant donné les propriétés de dissolution proportionnelle au pH initial de l'eau et l'arrêt de la dissolution lorsque la neutralité est atteinte, des quantités importantes de composition peuvent être disposés dans le bac pour diminuer la fréquence de renouvellement.

Les effets positifs de l'utilisation de la composition selon l'invention ont été mesurés chez la vache laitière et ont mis en évidence une augmentation significative de la production laitière et de matière utile (matières grasses et protéiques) dans le lait, une amélioration des performances de reproduction, une réduction des symptômes d'acidose et une amélioration de l'état général et de la santé des individus.

Ces résultats sont extrapolables à toutes les autres espèces de ruminant (ovin, caprin, ...). La composition selon l'invention contribue donc à la préservation de la santé des animaux, à l'amélioration des performances zootechniques et à la rentabilité des élevages.

Le deuxième exemple présente une application pour le secteur industriel avec le traitement des effluents acides.

Dans le secteur industriel, de nombreuses industries émettent des effluents acides au cours de leur fonctionnement. C'est le cas, par exemple, de l'industrie des produits phytosanitaires lors du lavage et de la purification des composés produits, de l'industrie chimique lors de la synthèse des colorants, de l'industrie textile lors des étapes de teinture et de blanchiment et les industries agro-alimentaires lors du lavage des installations.

Ces industries sont contraintes légalement à la maîtrise du pH des effluents rejetés dans le milieu naturel. Les effluents acides doivent donc subir une étape préalable de neutralisation avant rejet dans le milieu naturel. Cette étape de neutralisation est également utile pour améliorer l'efficacité du traitement lorsque les effluents ne sont pas rejetés directement dans le milieu naturel mais subissent un transfert et un traitement en station d'épuration.

La Fig. 5 illustre un exemple d'utilisation de la composition selon l'invention dans le cas d'une installation de neutralisation pour effluents industriels. La composition sous forme solide (12) est alors immergée dans une cuve de neutralisation (2) près de l'entrée des effluents (14) à neutraliser. Ceci constitue une installation autonome de base. Cette installation peut être complétée par des équipements facultatifs, utiles pour la gestion du traitement. Les effluents peuvent être acheminés dans la cuve par une pompe (15). Cette cuve peut être éventuellement équipée d'un agitateur (6) pour homogénéiser les effluents à traiter selon le volume à traiter. La dissolution progressive de la forme solide entraîne la neutralisation du pH des effluents déversés en flux continu ou non dans la cuve de neutralisation. L'évolution peut être suivie par une électrode de mesure du pH (7). Les effluents neutralisés sont ensuite évacués de la cuve par un tuyau de décharge (16) équipé d'une électrovanne (17) pour déclencher, en lien avec la mesure du pH par électrode, l'évacuation des effluents à une valeur de pH comprise entre le niveau de pH initial des effluents acheminés dans la cuve de neutralisation et le pH neutre. La composition placée dans la cuve doit être renouvelée avant dissolution complète pour assurer en continu le phénomène de neutralisation.

Le troisième exemple décrit dans ce qui suit est une utilisation par des particuliers de la composition selon l'invention dans le traitement des eaux de piscine.

Pour garantir le confort des baigneurs et l'efficacité des produits de désinfection, le pH d'une eau de piscine doit être maintenu à des valeurs comprises entre 7.2 et 7.6. Si la piscine est remplie avec une eau initialement acide, il convient de neutraliser le pH.

Le principe de neutralisation de l'eau de piscine avec la composition solide proposée par l'invention consiste à placer cette forme dans les skimmers de la piscine. La dissolution progressive va permettre une neutralisation régulière de l'eau de la piscine. La forme solide est à renouveler après dissolution.

Le quatrième exemple décrit dans ce qui suit concerne le traitement des eaux de pluie, plus particulièrement, la correction de leur pH. Les eaux de pluie sont aujourd'hui de plus en plus récupérées et stockées par les particuliers, notamment dans un but d'économie d'achat d'eau. Ces eaux présentent souvent un pH acide, c'est-à-dire, en dessous d'une valeur de pH neutre. Pour le respect du matériel de stockage et pour son utilisation à des fins domestiques, cette eau nécessite d'être neutralisée. Dans ce but, la composition sous forme solide selon l'invention peut être simplement placée dans le bac de stockage de l'eau de pluie ou encore dans un pré-bac de remplissage.

D'autres mélanges de substances alcalinisantes que ceux décrits dans ce qui précède sont envisageables et peuvent être déterminés facilement et sans efforts excessifs par l'homme du métier qui connaît, après lecture de la description ci-dessus, les propriétés de dissolution de la composition selon l'invention.

## Revendications

1. Composition solide destinée à corriger et à neutraliser le pH d'un fluide acide jusqu'à une valeur de pH égale ou proche de 7, **caractérisé en ce qu'**elle est composée d'un mélange comprenant au moins deux substances alcalinisantes et présentant la propriété de se dissoudre dans ledit fluide uniquement jusqu'à ce que le pH dudit fluide soit égal ou proche de 7.

2. Composition selon la revendication 1, **caractérisée en ce que** lesdites substances alcalinisantes sont choisies parmi les carbonates, les oxydes ou les phosphates de métaux alcalins ou alcalino-terreux ou un de leurs mélanges.

3. Composition selon la revendication 1 ou 2, **caractérisée en ce que** lesdites substances alcalinisantes sont choisies parmi le carbonate de sodium, le carbonate de calcium, le phosphate de magnésium, l'oxyde de magnésium, le phosphate monobicalcique ou un de leur mélanges.

4. Composition selon l'une des revendications précédentes, **caractérisée en ce que** les substances alcalinisantes sont présentes à une concentration comprise entre 10 et 80 % de la composition totale du mélange.

5. Composition selon l'une des revendications précédentes, **caractérisée en ce que** ledit mélange est composé de (a) 10 à 80 %, préférentiellement 35 à 50 %, de carbonate de sodium ou de carbonate de calcium, et de (b) 10 à 80 %, préférentiellement 35 à 50 %, de phosphate de magnésium, d'oxyde de magnésium ou de phosphate monobicalcique, en pourcentage de la formule.

6. Composition selon l'une des revendications 1 à 4, **caractérisée en ce que** ledit mélange comprend (a) 10 à 80 %, préférentiellement 35 à 50 %, de carbonate de sodium, (b) 10 à 80 %, préférentiellement 35 à 50 %, de carbonate de calcium et (c) 10 à 80 %, préférentiellement 35 à 50 %, plus préférentiellement 10 à 30 %, de phosphate de magnésium, d'oxyde de magnésium ou de phosphate monobicalcique, en pourcentage de la formule.

7. Composition selon la revendication 6, **caractérisée en ce que** ledit mélange comprend 10 à 80 %, préférentiellement 35 à 50 %, de carbonate de sodium, 10 à 80 %, préférentiellement 35 à 50 %, de carbonate de calcium et 10 à 80 %, préférentiellement 35 à 50 %, plus préférentiellement 10 à 30 %, de phosphate de magnésium, en pourcentage de la formule.

8. Composition selon l'une des revendications précédentes, **caractérisée en ce que** ledit mélange comprend, de plus, au moins une autre substance chimique, organique ou minérale connue pour présenter un intérêt technique pour le traitement de l'eau ou pour l'usage de l'eau traitée.

9. Composition selon la revendication 8, **caractérisée en ce que** ladite autre substance chimique, organique ou minérale connue pour présenter un intérêt technique pour le traitement de l'eau ou pour l'usage de l'eau traitée est choisie parmi des oligoéléments, des vitaminiques, des algicides, des désinfectants ou un de leur mélange.

10. Composition selon l'une des revendications précédentes, **caractérisée en ce qu'**elle se présente sous une forme cubique, cylindrique, sphérique, annulaire, rectangulaire.

11. Utilisation d'une composition solide selon l'une des revendications 1 à 10 pour le traitement de tous les types d'eau et de fluides acides.

12. Utilisation selon la revendication 11 pour traiter les eaux d'abreuvement en alimentation humaine et animale.

13. Utilisation selon la revendication 11 pour traiter les eaux ou tous fluides issus d'une activité industrielle.

14. Utilisation selon la revendication 11 pour traiter les eaux de pluies.

15. Procédé de fabrication d'une composition solide selon l'une des revendications 1 à 10, **caractérisé en ce qu'**il comprend les étapes suivantes de
- préparation d'un mélange comprenant 70% des matières premières en poudre et 30% d'eau acide à un pH de 4 à 5 et à une température comprise entre 10 et 15 °C,
- moulage
- séchage pendant 2 à 3 jours à température ambiante de 18 °C et hygrométrie de 50% ou à l'aide d'une étuve.
